# EUROPEAN PATENT SPECIFICATION

(11) **EP 3 609 705 B1**
(45) Date of publication and mention of the grant of the patent: **22.11.2023**
(21) Application number: 18718133.4
(22) Date of filing: 12.04.2018
(51) Int. Cl.: B32B 43/00, B32B 37/04, B29B 17/02, B29L 31/00

(54) **METHOD FOR SEPARATING LAYERS OF A LAMINATED TEXTILE PRODUCT AND A SYSTEM TO APPLY THIS METHOD**
VERFAHREN ZUR TRENNUNG VON SCHICHTEN EINES LAMINIERTEN TEXTILPRODUKTS UND SYSTEM ZUR ANWENDUNG DIESES VERFAHRENS
PROCÉDÉ DE SÉPARATION DES COUCHES D'UN PRODUIT TEXTILE STRATIFIÉ ET SYSTÈME POUR EXÉCUTER LEDIT PROCÉDÉ

(30) Priority: 12.04.2017 EP 17166191
(43) Date of publication of application: 19.02.2020
(73) Proprietor: Covestro (Netherlands) B.V., 6167 RD Geleen (NL)
(72) Inventor: VAN ROIJ, Wilhelmus Theodorus Maria, 6100 AA Echt (NL)
(74) Representative: Levpat
(86) International application number: PCT/EP2018/059409
(87) International publication number: WO 2018/189304

(56) References cited:
- JP-A- 2010 069 083

## Description

### GENERAL FIELD OF THE INVENTION

The present invention in general pertains to a method for separating layers of a laminated textile product, the laminated textile product comprising a first layer comprising a primary carrier sheet with yarns stitched therein, which yarns form a pile on the front surface of this sheet, and a second layer comprising a secondary carrier sheet operatively connected to the back surface of the primary carrier sheet by use of an intermediate layer comprising a thermoplastic adhesive, the method comprising heating the intermediate layer to a temperature above a softening temperature of the thermoplastic adhesive, and thereafter mechanically taking hold of the first layer, while at the same time mechanically taking hold of the second layer, and applying forces on both layers in diverging directions to separate the first layer from the second layer. The invention also pertains to a system that is suitable for applying this method.

### BACKGROUND OF THE INVENTION

A method as described in the *General field of the invention* section here above is known from JP2006000433 (assigned to Sato Michiyo). The purpose of this known method is to create a method that enables recycling of textile products, in particular a carpet product (i.a. a textile product that is used to cover at least part of a floor, wall or other surface of an object such as for example broad loom carpet, carpet tiles, entrance mats, car mats, airplane and boat mats, runners etc.) to reduce industrial wastes. The solution provided in the Japanese patent application is to firstly weaken the adhesion strength of the thermoplastic adhesive between the primary carrier sheet and the secondary carrier sheet by warming the carpet as a whole to above a softening temperature of the adhesive, in this case above 40°C, and then to apply forces on both layers in opposite directions to separate the first layer from the second layer. This is accomplished by applying a torque by using two pairs of rolls provided with radially extending sharp pins that penetrate the carrier sheets, the rolls being rotated at the same speed but counter clockwise. This known method has some disadvantages. The main disadvantage being that the sharp pins of the upper rolls must penetrate sufficiently into the primary carrier sheet to provide for a sufficient mechanical holding of the first layer. With this, depending on the type of carpet to be recycled, the pins may even extend into the second layer which increases the risk of tearing of the product instead of an adequate separation of the two layers. For that reason, this method is typically used only when the primary backing is a relatively thick sheet, for example a non-woven backing such as obtainable from Low&Bonar (Arnhem, The Netherlands). Secondly, also depending on the type of primary carrier sheet, the mechanical holding of the first layer is not very strong, which may lead to non-separation of the layers for certain products, effectively reducing the application of this known method to only a small portion of the existing textile products.

Another method for recycling a laminated carpet material is known for example from JP2005144076 (Tajima Inc.). In this method the adhesive is firstly heated to about 80°C whereafter the individual layers of the laminate are separated by stretching the carpet between two pairs of gripping means in order to break the connection between the carrier sheets. The breaking of the connection between the sheets can be improved by using cam or roller means to apply additional mechanical forces. Still, this method can only be applied with a very particular type of textile product wherein the adhesive layer breaks before the primary or secondary carrier do.

An alternative method is described in JP2010069083 (Suminoe Textile). In this method the primary carrier sheet is separated from the backing layer by heating the laminated textile product to a temperature of 170-220°C and then peeling off the backing layer from the rest of the laminate by using a row of knives. A disadvantage of this method is that the reliability of the method decreases significantly when the knives wear or when adhesive material sets on the surface of the knives. Also, the positioning of the knives is very cumbersome.

In yet an alternative method, described in JP2015104439 (Shigenka Kenkyusho KK), in a recycling system for laminated carpet tiles, the tiles are at first heated to a temperature of 170-210°C, where after the primary backing and the secondary backing are separated by means of rubbing. The rubbing can be executed by transporting the tiles through a roller nip, in which nip there is a velocity difference between the surfaces of the rollers. In a second embodiment, the layers are rubbed by means of cam like elements on either a stationary element, or a cylinder with surface protrusions in the form of needles, pens or other cam like elements. The forces that can be applied by rubbing are such that this method is only applicable with a particular type of textile products.

### OBJECT OF THE INVENTION

It is an object of the invention to provide an improved method for separating layers of a laminated textile product, and to provide a system that is suitable for applying this method.

### SUMMARY OF THE INVENTION

In order to meet the object of the invention, a method as described in the *General field of the invention* section here above has been devised in which method the first layer is taken hold of by grasping at least part of the yarns. This invention was based on the recognition that it is advantageous, instead of aiming at taking hold of first layer by mechanically connecting to the primary carrier sheet, to try and aim at taking hold of the first layer by mechanically connecting to the pile (only). The reason for this is that by connecting to the pile only, the risk of tearing of the product during delamination is significantly reduced, even when the primary carrier sheet is only very thin. This also has the implication that a reliable application of the delamination method does not depend on a certain minimal thickness of the primary carrier sheet. This makes the method more versatile. Mechanically connecting the pile is however not straightforward. For this, applicant devised a method wherein the yarns (only) are actually grasped, i.e. seized and then held firmly. This can be accomplished by using various grasping means for yarns, which means may be known from the art as such. The grasping of the yarns enables that the first layer can be taken mechanically hold of along a length that corresponds at maximum to the width of the textile product, or even across a surface of the textile product, instead of taken hold of at the edges as known from JP2010069083. The invention is particularly suitable for laminated carpet products having restricted dimensions such as carpet tiles, entrance mats and runners.

The present method is not restricted to a laminate that consist of two layers only. The laminate may comprise more than two separate layers, for example since the primary and or secondary carrier sheet are each comprised of more than one layer. Also, it is envisioned that there is an additional intermediate layer (or more than one intermediate layers) between the primary carrier sheet and the secondary carrier sheet, such as for example a resilient layer to increase the comfort (softness) of the textile product. Such embodiments are all encompassed by the claims as filed.

It is noted that the present invention also pertains to a system for separating layers of a laminated textile product as defined here above (in particular a laminated carpet product having restricted dimensions) wherein the system comprises a first station comprising a heating element, for example an element that produces micro waves, in which station the intermediate layer can be heated to a temperature above a softening temperature of the thermoplastic adhesive, and downstream thereof a second station comprising a grasping structure to take hold of the first layer by grasping at least part of the yarns, and a holding structure to take hold of the second layer, wherein the grasping structure and holding structure are movable in diverging directions to separate the layers.

### DEFINITIONS

*Laminated* means to be formed as a structure comprising multiple stacked layers mechanically connected to each other.

A *textile product* is a product that comprises textile (i.e. material made mainly of natural or artificial fibres, often referred to as thread or yarn), optionally with other components such as backing layers, carrier layers and/or adhesives. Textile products typically comprise an upper layer of pile attached to a backing (where the raised pile fibres are also denoted as the "nap" of the product) but may also be flat weave. Such products can be of various different constructions such as woven, needle felt, knotted, tufted and/or embroidered, though tufted products are the most common type. The pile may be cut (as in a plush carpet) or form loops (as in a Berber carpet).

A *sheet* is a substantially two dimensional mass or material, *i.e.* broad and thin, typically, but not necessarily rectangular in form, and inherently has two opposite surfaces.

*Stitching* is a method of mechanically making a yarn part of an object by stitches or as if with stitches, such as by tufting, knitting, sewing, weaving etc.

*Operatively connected* means connected directly or indirectly (via one or more intermediate elements), such that there is a mechanical connection.

The *softening temperature* of a thermoplastic material is the temperature above which the material becomes relatively easily deformable. The softening temperature can be established using standardized ASTM method D1525 which establishes the so-called Vicat Softening Temperature. For amorphous thermoplastics this softening temperature is typically around their glass transition temperature (Tg), and crystalline thermoplastics it is typically around their melting temperature (Tm).

A *plier unit* is a unit for gripping comprising two pivoted limbs forming a pair of jaws, which jaws can have an open configuration to be put over an object and a closed configuration wherein the object is grasped and taken hold of.

For two lines to *extend in a parallel* direction means that there is at least partly an overlap in the direction in which the lines extend, the lines are thus not perpendicular (i.e. the lines do not cross under an angle of 90 or 270 degrees).

*Micro waves* are electromagnetic waves with a wavelength in the range 0.001-1 m usable for heating materials.

### EMBODIMENTS OF THE INVENTION

In a first embodiment of the method according to the invention, in which embodiment the pile comprises elongated yarns that have a free distal end facing away from the primary carrier sheet (for example a so-called "cut-pile" product), the yarns are grasped by using multiple plier units, each unit comprising two separate rigid elongated elements that are hinged with respect to each other, such that they are configured between a first configuration wherein the elements are hinged away from each other, and a second configuration wherein the elements are hinged towards each other for grasping the yarns. Yarns that have a free distal end are relatively difficult to grasp. For this, applicant devised this embodiment wherein the yarns are grasped using multiple plier units. A plier appears to be very suitable to grasp such yarns to mechanically take hold of the first layer.

In a further embodiment the multiple plier units are configured laterally to form a row having a length that corresponds to the width of the textile product. This way, the first layer can be taken mechanically hold of along a length that corresponds to the width of the textile product. This appears to be very suitable for applying the needed forces to reliably separate the two layers.

In yet a further embodiment the rigid elongated elements are positioned on an endless carrier, which carrier is moved in a length direction of the textile product to force the rigid elongated elements to take the first configuration when the first layer does not need to be taken hold of, and to force the rigid elongated elements to take the second configuration when the first layer needs to be taken hold of. Plier units have to be actuated to switch between the open and closed configuration. Applicant devised a very convenient way to impose this switch by positioning the two jaws (i.e. the two rigid elongated elements) of the pliers on and endless carrier, which carrier is moved, and by its movement forces the switching between the open and closed configuration. This way, a separate actuation unit can be dispensed with. In this embodiment the endless carrier can be a chain being guided over sprockets, wherein each plier-like element is formed by the first rigid elongated element being fixed to a first chain link, and the second rigid elongated element is fixed to an adjacent chain link. By moving the chain over the sprocket, the spatial configuration of the links (in particular, the angle under which they are positioned) changes from 180° to for example 140° (depending on the sprocket radius), which also changes the spatial configuration of the jaws. By having a closed configuration when the links have a mutual angle of 180°, the jaws will open if the angle decreases. Apart from the fact that no separate actuation mechanism is needed, a separate hinge is also not needed to provide for a hinged configuration. This configuration comes about by simply relying on movement of the chain links over a sprocket.

In another embodiment wherein the pile comprises looped yarns, wherein the loops face away from the primary carrier sheet, the yarns are grasped by multiple pegs that each extend through one or more loops of the laminated textile product. The method of this embodiment is particularly suitable for so-called loop pile carpet. Applicant recognised that the loops can be advantageously used to grasp the yarns by simply having a peg extending through a loop of (in a direction parallel to) the laminated textile product (like a medieval knight catching a ring with his lance while running at the ring).

Advantageously the pegs extend in a direction that forms an angle between 0° and 45° with the plane of the textile product when these pegs extend through the corresponding
loop. This provides for a convenient and reliable anchoring of the loops by inserting the pegs.

In still another embodiment the forces on both layers are applied by forcing the first layer to be transported in a first direction while the second layer is transported in a direction substantially perpendicular to the first direction. Diverging the two layers by applying this perpendicular movement proved to be a convenient and reliable way of separating the layers. In a further embodiment the first direction is in essence parallel to the horizontal plane, whereas the second direction is in essence parallel to and in the same direction as gravity. In this embodiment the first layer is moved forward in essence horizontally, while the second layer is transported downwardly. The advantage is that the de-connection of the two layers with their holding means can be effectuated very easily. The first layer can be simply released by having the endless carrier, such as the chain, moving away from the first layer (for example over a sprocket). The second layer can be released by relying on mere gravity that pulls the second layer from the holding means. Preferably, the distance between the point at which the first layer is grasped to the point at which the second layer is taken hold off is between 10 and 500 mm, more particularly between 50 and 250 mm, even more particularly between 80 and 150 mm, most particularly between 100 and 115 mm. In another embodiment, instead of relying on mere gravity for release of the second layer, the second layer can be released by having a mechanism in place that withdraws the holding means, typically at a location downstream of the location where the second layer is separated from the first layer.

In again another embodiment, in which embodiment the secondary carrier sheet has a thickness of at least 1 mm, the second layer is taken mechanically hold of by forcing multiple needle-like elements into the secondary carrier sheet at a back side of this sheet, without these elements extending through a front side of this sheet. This way of taking hold of the second layer has found to be very convenient and reliable. Also, it is easy to release the second layer from the holding means by simply moving the second layer away from the needles in a length direction of the needles. When arranged vertically, the influence of gravity alone may suffice for releasing the second layer from the needles. For that, it is advantageous that the needles extend in the layer in a direction parallel to the plane in which the secondary carrier sheet extends.

In yet a further embodiment, in which embodiment the method comprises transporting the textile product in a process direction during separation of the layers, the needle-like elements are configured in a row that extends in the plane of the textile product and perpendicular to the process direction. This way, the second layer can be taken hold of over a length that corresponds to the width of the textile product. This decreases the risk of tearing and improves the reliability of the separating process. In a further embodiment the secondary sheet is taken hold of by using multiple rows of needle-like elements which rows have a minimal distance of 50 cm with respect to each other. By having at least a distance of 50 cm in between the rows, preferably at least 60, 70, 80, 90 or even 100 cm, the second layer is in fact only so "loosely" taken hold of by the (relatively low numbers of) needles that gravity may suffice to release the second layer from the needles.

### EXAMPLES

The invention will now be further explained using the following figures.
Figure 1 schematically shows a cross section of a laminated carpet tile.
Figure 2 schematically shows a system for applying the present method.
Figure 3 shows a detail of a chain carrying rigid elements that form a plier unit, depicted in a closed configuration.
Figure 4 shows a detail of the chain of figure 3, with the chain elements being guided over a sprocket to create an open configuration for the plier unit.
Figure 5 schematically shows a detail of the holding means for taking hold of the second layer.
Figure 6 shows one of the elements of figure 5 in a side view.
Figure 7 schematically shows a grasping means for grasping yarns of a loop pile carpet.

### Figure 1

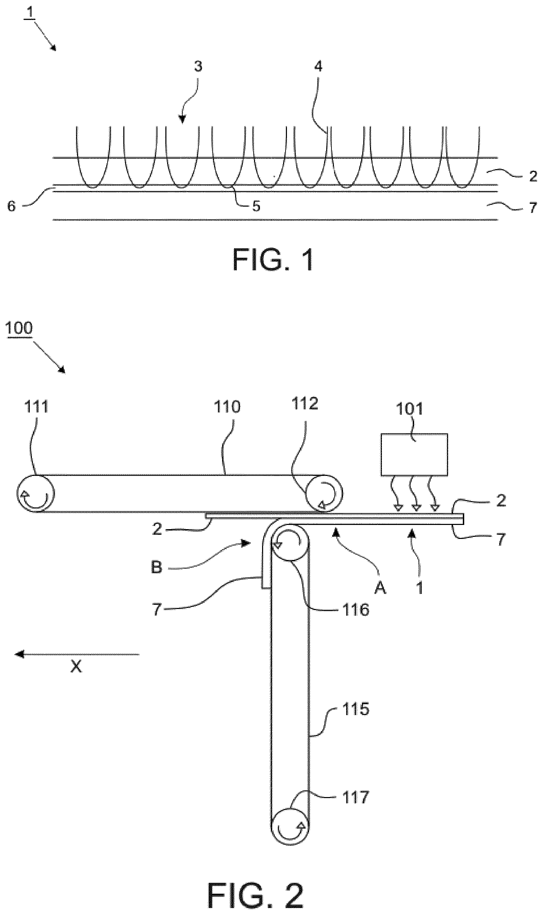

Figure 1 schematically shows a cross section of a laminated textile product, in this case a carpet tile. The tile 1 comprises a first layer 2, in this case consisting out of a unitary primary carrier sheet, which is a strong nonwoven sealed nylon obtained from Shaw Industries, Dalton USA. Nylon yarns 3 are tufted into this primary backing to form a pile on the front surface of the primary carrier sheet. In this so-called cut pile arrangement the distal free ends 4 of the yarns face away from the primary carrier sheet. The proximal section 5 of the yarns extend through this backing and form loops over its back surface. This way the proximal ends are preliminary locked into the primary backing. The yarns 3 are mechanically durably connected to the primary backing by sealing the proximal sections 5 to the primary carrier using a fibre binding method as known from WO2016/128360. The weight of this first sheet is 670 g per m². In order to provide mechanical stability, the tile 1 comprises a second layer 7 consisting out of a secondary carrier sheet, in this case a backing of a polyester needle felt backing fleece obtained as Qualitex Nadelvlies from TWE, Emsdetten, Germany. The weight of this second sheet is about 800 g/m². The two layers are connected using a polyester thermoplastic adhesive, applied as an intermediate layer 6 at a weight of about 200 g/m². The total weight of the carpet tile is thus about 1.7 kg/m².

### Figure 2

Figure 2 schematically shows a system 100 for applying the present method. In this system 100 a carpet tile 1, which tile comprises a first layer 2 and a second layer 7, connected by an intermediate thermoplastic adhesive layer (not shown in figure 2; see figure 1 for details of the arrangement of the layers) is fed in the direction X and firstly passes heating station 101. This station 101 produces micro waves to heat the intermediate thermoplastic layer to a temperature above its softening temperature. In this case, the thermoplastic layer comprises a polyester hot melt resin that is above its softening temperature at 105°C.

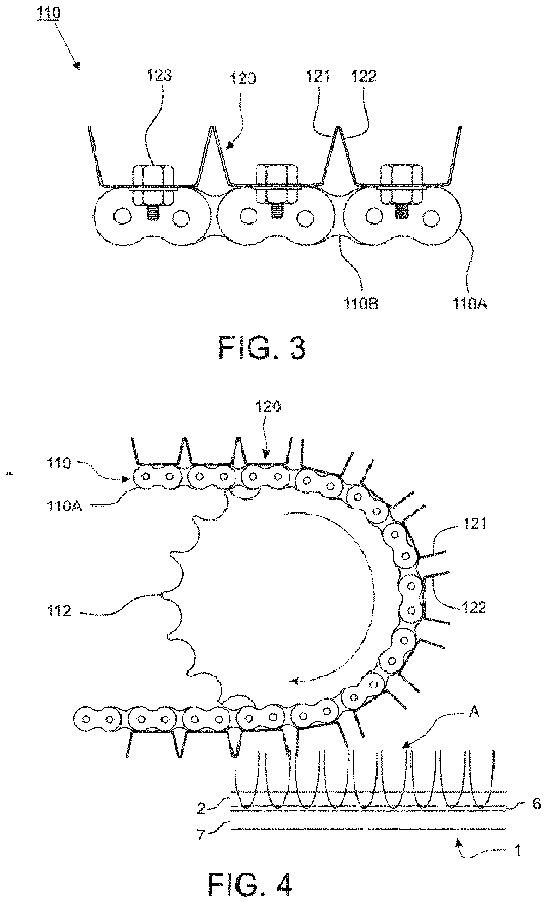

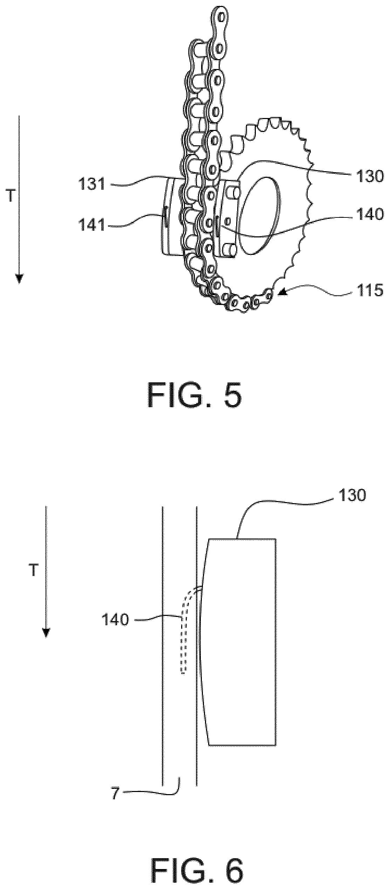

The carpet tile 1 is transported to a second processing station comprising endless carriers 110 and 115. When the carpet tile reaches position A, it mechanically meets the endless carrier 110, in this case a chain, that is provided with plier units (as such not shown in figure 2). The chain 110 is guided around sprockets 111 and 112 and rotated as indicated in figure 2. At position A, the plier units grasp the free ends of the yarns to mechanically take hold of the first layer 2 (for details, see figures 3 and 4). The tile is thereafter further transported to position B of the second processing station, at which position it meets the endless carrier 115, also a chain, which is provided with needles (not shown in figure 2; see figures 5 and 6 for details) that take hold of the second layer 7 by sticking into this layer. Chain 115 is guided over sprockets 116 and 117.

Since the thermoplastic layer is softened, by forcing the first layer 2 and the second layer 7 in diverging directions, the two layers can be separated as indicated in figure 2. The first layer remains horizontally. At sprocket 111 the plier units will release the yarns. When the complete length of the tile has passed sprocket 111, the layer 2 will be released as a single unitary layer from the chain 110. The secondary layer 7 will be held by the needles and moves downwardly. As soon as the trailing end of the tile passes position B, the second layer will slip of the needles under the influence of gravity and is thus released form the chain 115. For this, it is advantageous that the length of the tile is less than the distance between sprockets 116 and 117, and also, that the needles in the transport direction X have a distance of at least 50 cm with respect to each other.

In practice a number of these chains 110 and 115 are arranged parallel in a row, the row substantially covering a width of the carpet tile 1. This way, the layers are grasped over a length that corresponds to their width, which increases the reliability of the method by decreasing the chance that the layer is not adequately taken hold of, and also, to decrease the risk that the layers tear.

### Figure 3

Figure 3 shows a detail of a chain 110 carrying rigid elongated elements 121 and 122 that form a plier unit, depicted in a closed configuration. In this embodiment, the chain is a regular chain comprising links 110Aand 110B. Each link 110Acarries a rigid trapezium like element 120, which element is bolted to the chain link of the type 110A by using bolt 123. The adjacent legs 121 and 122 of two neighbouring trapezium elements together form the jaws of a plier unit. When the chain links are configured to form an angle of 180°, the adjacent legs are pushed together such that the plier unit is in a closed configuration.

### Figure 4

Figure 4 shows a detail of the chain of figure 3, with the chain elements being guided over a sprocket 112 to create an open configuration for the plier unit. In this configuration, neighbouring chain links are configured under an angle of about 160°, which means that the legs 121 and 122 are no longer in contact and thus, the corresponding plier unit is in an open configuration. Just before position A (see also figure 2) the plier units are still in an open configuration and thereby the free distal ends of the yarns of carpet tile 1 will be positioned in the jaws of the plier units. At position A, each plier unit will close by having the chain links in a 180° arrangement. This way, the yarns are grasped and the first layer is mechanically taken hold of.

### Figure 5

Figure 5 schematically shows in a front/side view a detail of the holding means for taking hold of the second layer. Depicted are a few chain links of chain 115, and two parallel plate elements 130 and 131 connected to this chain link on opposite sides thereof (connection plates not shown). The front side of these plate elements 130 and 131 protrudes slightly from the front side of the chain links. On the plate like elements 130 and 131, needles 140 and 141 are provided respectively. These needles are connected to the plate like elements at their upstream end (with regard to the direction of transport T as indicated, see also figure 6). These needles are forced into the secondary carrier sheet at a back side of this sheet to mechanically take hold of this sheet.

### Figure 6

Figure 6 shows one of the plate like elements 130 of figure 5 in a side view in its spatial relationship with the second layer being taken hold of. It can be seen that the needle 140 is connected to the plate like element 130 at its upstream end (with respect to transport direction T). The needle is forced into the second layer 7 without extending through a front side of this layer. In this embodiment the needle extends in the layer 7 in a direction parallel to the plane in which the layer 7 extends.

### Figure 7

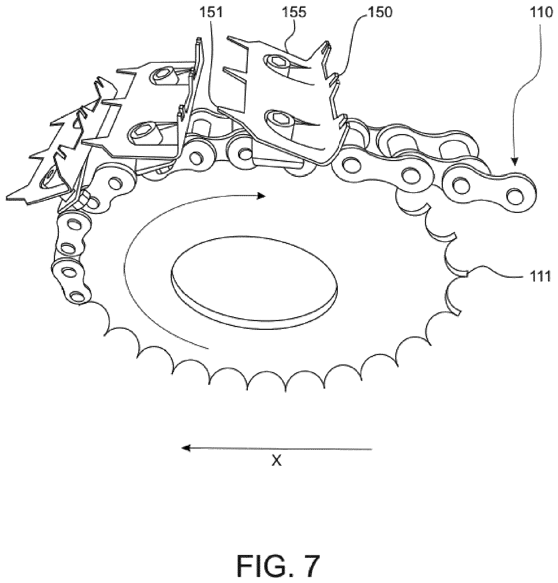

Figure 7 schematically shows a grasping means for grasping yarns of a loop pile carpet. The arrangement of this means is comparable to that of the grasping means for a cut pile as indicated in figure 3. In this case however, the grasping means comprises an L-shaped plate 155 having grasping pegs 150 and three teeth 151 extending from its horizontal plane. When the chain turns around its sprocket 112 in the direction as indicated, the elements 155 are fed towards sprocket 111 (see figure 2 for the complete configuration). When a loop pile carpet is fed underneath the sprocket 112 in the direction X, the teeth 151 are forced to extend (at least partly) through on more loops of the laminated textile product, hence grasping the yarns and thereby mechanically take hold of the first layer (primary carrier plus yarns) of the carpet. The teeth 151 hold down the carpet. The pegs 150 hold the loops over the teeth 151.

It is noted that the present method and system could be applied in situ where carpet or any other textile product is released from its surface to be recycled. It may be that the carpet or other textile product is first cut into appropriate pieces. It is also possible to perform the method on a more industrial scale remote from the actual places where the products have been used. For this, the carpet or other textile products are generally collected, gathered and then subjected to the current process. The latter embodiment has the advantage that the system can be adapted more easily to laminated products having large dimensions such as broadloom carpet, staircase runners etc.

## Claims

1. Method for separating layers (2, 7) of a laminated textile product (1), the laminated textile product comprising a first layer (2) comprising a primary carrier sheet with yarns (4) stitched therein, which yarns form a pile on the front surface of this sheet, and a second layer (7) comprising a secondary carrier sheet operatively connected to the back surface of the primary carrier sheet by use of an intermediate layer (6) comprising a thermoplastic adhesive, the method comprising heating the intermediate layer to a temperature above a softening temperature of the thermoplastic adhesive, and thereafter mechanically taking hold of the first layer, while at the same time mechanically taking hold of the second layer, and applying forces on both layers in diverging directions to separate the first layer from the second layer, **characterised in that** the first layer is taken hold of by grasping at least part of the yarns.

2. A method according to claim 1, wherein the pile comprises elongated yarns that have a free distal end facing away from the primary carrier sheet, **characterised in that** the yarns are grasped by using multiple plier units, each unit comprising two separate rigid elongated elements that are hinged with respect to each other, such that they are configured between a first configuration wherein the elements are hinged away from each other, and a second configuration wherein the elements are hinged towards each other for grasping the yarns.

3. A method according to claim 2, **characterised in that** the multiple plier units are configured laterally to form a row having a length that corresponds to the width of the textile product.

4. A method according to claim 2 or 3, **characterised in that** the rigid elongated elements are positioned on an endless carrier, which carrier is moved in a length direction of the textile product to force the rigid elongated elements to take the first configuration when the first layer does not need to be taken hold of, and to force the rigid elongated elements to take the second configuration when the first layer needs to be taken hold of.

5. A method according to claim 4, **characterised in that** the endless carrier is a chain being guided over sprockets, wherein each plier-like element is formed by the first rigid elongated element being fixed to a first chain link, and the second rigid elongated element is fixed to an adjacent chain link.

6. A method according to claim 1, wherein the pile comprises looped yarns, wherein the loops face away from the primary carrier sheet, **characterised in that** the yarns are grasped by multiple pegs that each extend through on more loops of the laminated textile product.

7. A method according to claim 6, **characterised in that** the pegs extend in a direction that forms an angle between 0° and 45° with the plane of the textile product when these pegs extend through the corresponding loop.

8. A method according to any of the preceding claims, **characterised in that** the forces on both layers are applied by forcing the first layer to be transported in a first direction while the second layer is transported in a direction substantially perpendicular to the first direction.

9. A method according to claim 8, **characterised in that** the first direction is in essence parallel to the horizontal plane, whereas the second direction is in essence parallel to and in the same direction as gravity.

10. A method according to any of the preceding claims, wherein the secondary carrier sheet has a thickness of at least 1 mm, **characterised in that** the second layer is taken mechanically hold of by forcing multiple needle-like elements into the secondary carrier sheet at a back side of this sheet, without these elements extending through a front side of this sheet.

11. A method according to claim 10, **characterised in that** the needle-like elements extend in the layer in a direction parallel to the plane in which the secondary carrier sheet extends.

12. A method according to any of the claims 10 or 11, wherein the method comprises transporting the textile product in a process direction during separation of the layers, **characterised in that** the needle-like elements are configured in a row that extends in the plane of the textile product and perpendicular to the process direction.

13. A method according to claim 12, **characterised in that** the secondary sheet is taken hold of by using multiple rows of needle-like elements which rows have a minimal distance of 50 cm with respect to each other.

14. A system (100) for separating layers (2, 7) of a laminated textile product (1), the laminated textile product comprising a first layer (2) comprising a primary carrier sheet with yarns (4) stitched therein, which yarns form a pile on the front surface of this sheet, and a second layer (7) comprising a secondary carrier sheet operatively connected to the back surface of the primary carrier sheet by use of an intermediate layer (6) comprising a thermoplastic adhesive, the system comprising a first station (101) comprising a heating element wherein the intermediate layer can be heated to a temperature above a softening temperature of the thermoplastic adhesive, and downstream thereof a second station (110, 115) comprising a grasping structure (121, 122) to take hold of the first layer by grasping at least part of the yarns, and a holding structure (130, 140) to take hold of the second layer, wherein the grasping structure and holding structure are movable in diverging directions.

15. A system according to claim 14, **characterised in that** the heating element is an element that produces micro waves.

## Patentansprüche

1. Verfahren zur Trennung von Schichten (2, 7) eines laminierten Textilprodukts (1), wobei das laminierte Textilprodukt eine erste Schicht (2) mit einem primären Trägerblatt, in das Fäden (4) eingenäht sind, wobei die Fäden einen Flor auf der Vorderseite dieses Blattes bilden, und eine zweite Schicht (7) mit einem sekundären Trägerblatt umfasst, das durch Verwendung einer einen thermoplastischen Klebstoff umfassenden Zwischenschicht (6) mit der Rückseite des primären Trägerblattes wirkverbunden ist, wobei das Verfahren das Erhitzen der Zwischenschicht auf eine Temperatur oberhalb einer Erweichungstemperatur des thermoplastischen Klebstoffes und anschließend mechanisches Greifen nach der ersten Schicht, während gleichzeitig nach der zweiten Schicht gegriffen wird, und das Ausüben von Kräften auf beide Schichten in auseinanderlaufenden Richtungen, um die erste Schicht von der zweiten Schicht zu trennen, umfasst, **dadurch gekennzeichnet, dass** nach der ersten Schicht gegriffen wird, indem wenigstens ein Teil der Fäden ergriffen wird.

2. Verfahren nach Anspruch 1, wobei der Flor längliche Fäden umfasst, die ein freies entferntes Ende aufweisen, die von dem primären Trägerblatt abgewandt sind, **dadurch gekennzeichnet, dass** die Fäden unter Verwendung von mehreren Zangenvorrichtungen ergriffen werden, wobei jede Vorrichtung zwei getrennte starre längliche Elemente umfasst, die in Bezug zueinander auf eine solche Weise schwenkbar sind, dass sie zwischen einer ersten Anordnung, bei der die Elemente voneinander weg geschwenkt sind, und einer zweiten Anordnung, bei der die Elemente zueinander hin geschwenkt sind, um die Fäden zu ergreifen, angeordnet sind.

3. Verfahren nach Anspruch 2, **dadurch gekennzeichnet, dass** die mehreren Zangenvorrichtungen seitlich dazu ausgelegt sind, eine Reihe zu bilden, die eine der Breite des Textilprodukts entsprechende Länge aufweist.

4. Verfahren nach Anspruch 2 oder 3, **dadurch gekennzeichnet, dass** sich die starren länglichen Elemente an einem endlosen Träger befinden, der in einer Längsrichtung des Textilprodukts bewegt wird, um die starren länglichen Elemente dazu zu zwingen, die erste Anordnung einzunehmen, wenn nicht nach der ersten Schicht gegriffen werden muss, und die starren länglichen Elemente dazu zu zwingen, die zweite Anordnung einzunehmen, wenn nach der ersten Schicht gegriffen werden muss.

5. Verfahren nach Anspruch 4, **dadurch gekennzeichnet, dass** es sich bei dem endlosen Träger um eine Kette handelt, die über ein Zahnrad geleitet wird, wobei jedes zangenähnliche Element dadurch gebildet ist, dass das erste starre längliche Element an einem ersten Kettenglied befestigt ist und das zweite starre längliche Element an einem angrenzenden Kettenglied befestigt ist.

6. Verfahren nach Anspruch 1, wobei der Flor Schlingenfäden umfasst und wobei die Schlingen von dem primären Trägerblatt abgewandt sind, **dadurch gekennzeichnet, dass** die Fäden von mehreren Rasten ergriffen werden, die sich jeweils durch eine oder mehrere Schlingen des laminierten Textilprodukts erstrecken.

7. Verfahren nach Anspruch 6, **dadurch gekennzeichnet, dass** sich die Rasten in eine Richtung erstrecken, die einen Winkel zwischen 0° und 45° zur Ebene des Textilprodukts bildet, wenn sich diese Rasten durch die entsprechende Schlinge erstrecken.

8. Verfahren nach einem der vorhergehenden Ansprüche, **dadurch gekennzeichnet, dass** die Kräfte auf beide Schichten ausgeübt werden, indem bewirkt wird, dass die erste Schicht in einer ersten Richtung transportiert wird, während die zweite Schicht in einer Richtung transportiert wird, die im Wesentlichen senkrecht zu der ersten Richtung verläuft.

9. Verfahren nach Anspruch 8, **dadurch gekennzeichnet, dass** die erste Richtung im Wesentlichen parallel zu der horizontalen Ebene verläuft, während die zweite Richtung im Wesentlichen parallel zur Schwerkraftrichtung und in der gleichen Richtung wie diese verläuft.

10. Verfahren nach einem der vorhergehenden Ansprüche, wobei das sekundäre Trägerblatt eine Dicke von wenigstens 1 mm aufweist, **dadurch gekennzeichnet, dass** mechanisch nach der zweiten Schicht gegriffen wird, indem mehrere nadelähnliche Elemente in das sekundäre Trägerblatt auf einer Rückseite dieses Blattes gezwungen werden, ohne dass sich diese Elemente durch eine Vorderseite dieses Blattes erstrecken.

11. Verfahren nach Anspruch 10, **dadurch gekennzeichnet, dass** sich die nadelähnlichen Elemente in der Schicht in einer Richtung parallel zu der Ebene erstrecken, in der sich das sekundäre Trägerblatt erstreckt.

12. Verfahren nach einem der Ansprüche 10 oder 11, wobei das Verfahren das Transportieren des Textilprodukts während der Trennung der Schichten in einer Prozessrichtung umfasst, **dadurch gekennzeichnet, dass** die nadelähnlichen Elemente in einer Reihe ausgelegt sind, die sich in der Ebene des Textilprodukts und rechtwinklig zu der Prozessrichtung erstreckt.

13. Verfahren nach Anspruch 12, **dadurch gekennzeichnet, dass** nach dem sekundären Blatt gegriffen wird, indem mehrere Reihen von nadelähnlichen Elementen verwendet werden, wobei die Reihen einen Mindestabstand von 50 cm in Bezug zueinander aufweisen.

14. System (100) zur Trennung von Schichten (2, 7) eines laminierten Textilprodukts (1), wobei das laminierte Textilprodukt eine erste Schicht (2) mit einem primären Trägerblatt, in das Fäden (4) eingenäht sind, wobei die Fäden einen Flor auf der Vorderseite dieses Blattes bilden, und eine zweite Schicht (7) mit einem sekundären Trägerblatt umfasst, das durch Verwendung einer einen thermoplastischen Klebstoff umfassenden Zwischenschicht (6) mit der Rückseite des primären Trägerblattes wirkverbunden ist, wobei das System eine erste Station (101) umfasst, die ein Heizelement umfasst, wobei die Zwischenschicht auf eine Temperatur oberhalb einer Erweichungstemperatur des thermoplastischen Klebstoffes erhitzt werden kann, und stromabwärts davon eine zweite Station (110, 115) umfasst, die eine Greifstruktur (121, 122) umfasst, um nach der ersten Schicht zu greifen, indem wenigstens ein Teil der Fäden ergriffen wird, sowie eine Haltestruktur (130, 140) umfasst, um nach der zweiten Schicht zu greifen, wobei die Greifstruktur und die Haltestruktur in auseinanderlaufenden Richtung bewegbar sind.

15. System nach Anspruch 14, **dadurch gekennzeichnet, dass** es sich bei dem Heizelement um ein Element handelt, das Mikrowellen erzeugt.

## Revendications

1. Procédé de séparation de couches (2, 7) d'un produit textile stratifié (1), le produit textile stratifié comprenant une première couche (2) comprenant une feuille de support primaire dans laquelle sont cousus des fils (4), lesquels fils forment un velours sur la surface avant de cette feuille, et une seconde couche (7) comprenant une feuille de support secondaire reliée fonctionnellement à la surface arrière de la feuille de support primaire à l'aide d'une couche intermédiaire (6) comprenant un adhésif thermoplastique, le procédé comprenant les étapes consistant à chauffer la couche intermédiaire à une température supérieure à la température de ramollissement de l'adhésif thermoplastique, puis à prendre mécaniquement la première couche, tout en prenant mécaniquement la seconde couche, et à appliquer des forces sur les deux couches dans des directions divergentes pour séparer la première couche de la seconde couche, **caractérisé en ce que** la première couche est prise en saisissant au moins une partie des fils.

2. Procédé selon la revendication 1, le velours comprenant des fils allongés dont l'extrémité distale libre est orientée à l'opposé de la feuille de support primaire, **caractérisé en ce que** les fils sont saisis à l'aide de plusieurs unités de pince, chaque unité comprenant deux éléments allongés rigides séparés qui sont articulés l'un par rapport à l'autre, de sorte qu'ils soient conçus entre une première configuration dans laquelle les éléments sont articulés à l'opposé l'un de l'autre, et une seconde configuration dans laquelle les éléments sont articulés l'un vers l'autre afin de saisir les fils.

3. Procédé selon la revendication 2, **caractérisé en ce que** les plusieurs unités de pince sont conçues latéralement pour former une rangée dont la longueur correspond à la largeur du produit textile.

4. Procédé selon la revendication 2 ou 3, **caractérisé en ce que** les éléments allongés rigides sont positionnés sur un support sans fin, lequel support est déplacé dans la direction de la longueur du produit textile pour forcer les éléments allongés rigides à prendre la première configuration lorsque la première couche n'a pas besoin d'être saisie, et pour forcer les éléments allongés rigides à prendre la seconde configuration lorsque la première couche a besoin d'être saisie.

5. Procédé selon la revendication 4, **caractérisé en ce que** le support sans fin est une chaîne guidée par des pignons, chaque élément en forme de pince étant formé par le premier élément allongé rigide fixé à un premier maillon de chaîne, et le second élément allongé rigide étant fixé à un maillon de chaîne adjacent.

6. Procédé selon la revendication 1, le velours comprenant des fils bouclés, les boucles étant orientées à l'opposé de la feuille de support primaire, **caractérisé en ce que** les fils sont saisis par plusieurs chevilles qui s'étendent chacune à travers une ou plusieurs boucles du produit textile stratifié.

7. Procédé selon la revendication 6, **caractérisé en ce que** les chevilles s'étendent dans une direction qui forme un angle compris entre 0° et 45° avec le plan du produit textile lorsque ces chevilles s'étendent à travers la boucle correspondante.

8. Procédé selon l'une quelconque des revendications précédentes, **caractérisé en ce que** les forces sur les deux couches sont appliquées en forçant la première couche à être transportée dans une première direction tandis que la seconde couche est transportée dans une direction sensiblement perpendiculaire à la première direction.

9. Procédé selon la revendication 8, **caractérisé en ce que** la première direction est essentiellement parallèle au plan horizontal, tandis que la seconde direction est essentiellement parallèle à la gravité et dans la même direction que celle-ci.

10. Procédé selon l'une quelconque des revendications précédentes, la feuille de support secondaire ayant une épaisseur d'au moins 1 mm, **caractérisé en ce que** la seconde couche est prise mécaniquement en forçant plusieurs éléments en forme d'aiguille dans la feuille de support secondaire sur une face arrière de cette feuille, sans que ces éléments ne s'étendent à travers une face avant de cette feuille.

11. Procédé selon la revendication 10, **caractérisé en ce que** les éléments en forme d'aiguille s'étendent dans la couche dans une direction parallèle au plan dans lequel s'étend la feuille de support secondaire.

12. Procédé selon l'une quelconque des revendications 10 ou 11, le procédé comprenant l'étape consistant à transporter le produit textile dans une direction de traitement pendant la séparation des couches, **caractérisé en ce que** les éléments en forme d'aiguille sont conçus en une rangée qui s'étend dans le plan du produit textile et perpendiculairement à la direction de traitement.

13. Procédé selon la revendication 12, **caractérisé en ce que** la feuille secondaire est prise à l'aide de plusieurs rangées d'éléments en forme d'aiguille, lesquelles rangées ont une distance minimale de 50 cm l'une par rapport à l'autre.

14. Système (100) pour séparer les couches (2, 7) d'un produit textile stratifié (1), le produit textile stratifié comprenant une première couche (2) comprenant une feuille de support primaire dans laquelle sont cousus des fils (4), lesquels fils forment un velours sur la surface avant de cette feuille, et une seconde couche (7) comprenant une feuille de support secondaire reliée fonctionnellement à la surface arrière de la feuille de support primaire à l'aide d'une couche intermédiaire (6) comprenant un adhésif thermoplastique, le système comprenant une première station (101) comprenant un élément chauffant dans lequel la couche intermédiaire peut être chauffée à une température supérieure à une température de ramollissement de l'adhésif thermoplastique, et en aval de celle-ci une seconde station (110, 115) comprenant une structure de préhension (121, 122) pour prendre la première couche en saisissant au moins une partie des fils, et une structure de maintien (130, 140) pour prendre la seconde couche, la structure de préhension et la structure de maintien étant mobiles dans des directions divergentes.

15. Système selon la revendication 14, **caractérisé en ce que** l'élément chauffant est un élément qui produit des micro-ondes.
